# EUROPEAN PATENT SPECIFICATION

(11) **EP 4 043 370 B1**
(45) Date of publication and mention of the grant of the patent: **24.07.2024**
(21) Application number: 22156599.7
(22) Date of filing: 14.02.2022
(51) Int. Cl.: B65G 47/244, B65C 9/06, B65G 47/84

(54) **CAN ALIGNMENT SYSTEM WITHIN A CAN PROCESSING MACHINE AND RELATED MACHINE**
DOSENAUSRICHTUNGSSYSTEM INNERHALB EINER DOSENVERARBEITUNGSMASCHINE UND ZUGEHÖRIGE MASCHINE
SYSTÈME D'ALIGNEMENT DE BOÎTES DANS UNE MACHINE DE TRAITEMENT DE BOÎTES ET MACHINE CORRESPONDANTE

(30) Priority: 16.02.2021 IT 202100003524
(43) Date of publication of application: 17.08.2022
(73) Proprietor: ECOCAP'S S.r.l., 40033 Casalecchio di Reno(Bologna) (IT)
(72) Inventor: CASSOLI, Jacopo, 40033 CASALECCHIO DI RENO (IT); GIULIANI, Nicola, 40053 VALSAMOGGIA, Province of Bologna (IT); CATOZZI, Federico, 44123 FERRARA (IT)
(74) Representative: Mola, Edoardo

(56) References cited:
- EP-A2- 3 209 571
- CN-A- 105 050 924
- DE-A1- 2 853 696
- DE-U1- 202017 107 845
- FR-A1- 2 436 725
- GB-A- 1 040 239
- JP-A- 2007 277 004
- US-A1- 2011 108 389
- US-A1- 2015 027 327
- US-A1- 2015 375 943

## Description

The present invention relates to a can alignment system within a can processing machine and a can processing machine including such a system.

The field of application of the invention is the industrial field of production and/or processing of cans, typically cylindrical in shape comprising thin aluminium or tinplate, which may contain liquids of various types, such as for example soft drinks, beer, rather than food and the like immediately available through an opening generally closed by a removable tab positioned radially on a top surface of the can.

The can alignment system is particularly designed for a can encapsulating machine, which needs to have a fixed and defined alignment of the can when it enters an encapsulating station in order to be able to weld an overlay sheet precisely with respect to the positioning of the can tab, for example as described and illustrated in Italian patent application No. 102020000030905 in the name of the same applicant.

The latter was the first to discover and solve, in the general field of machines for processing cans and in particular for can encapsulating machines, the industrial need to provide cans which in a given station, in particular in the encapsulating station, arrive with a known and intended alignment so that the tab and relative opening on the upper surface are placed in a given angular position. In the case of encapsulating machines, it is desired that an overlay sheet is positioned in a known alignment with respect to a sealing head so as to generate a differentiated seal on the top edge of the can so that the overlay sheet remains sealed to an edge of the can after its use and can be advantageously disposed of in the environment together with the can.

With specific reference to an encapsulating machine and not limited thereto, a known state of the art technology is disclosed in patent document No. US2005160698, wherein an encapsulating machine that applies capsules to cans is illustrated and described. Part of it includes a can transport device, typically a screw conveyor device, which transfers cans from a first station to a first carousel suitable for sorting and distributing the cans to a second carousel, which has a plurality of sealing stations for applying an encapsulating foil or capsule to each can. Both diameters, and typically the second carousel having a much larger diameter than the first carousel so that it rotates much more slowly than the first carousel, a can transition device is placed for passing the cans from the cavities of the first carousel to the cavities of the second carousel. Considering that the processing of the cans takes place with an operation of the encapsulating machine in a continuous cycle, a can is transferred from the can transport device to a cavity of the first carousel where, due to the centrifugal force and the presence of an external bulkhead defining the cavities, it rotates about its vertical axis until it reaches a corresponding cavity of the second carousel, where it is again subjected to a centrifugal force of a considerably smaller value than the previous one, so that it tends to rotate about its axis in the opposite direction to the previous one, since the two carousels rotate in opposite directions.

In the known encapsulating machine, each can, from the passage from the first station to the encapsulating station, acquires an alignment of its upper surface with its relative opening and tongue which is absolutely random, so that the relative sealing of the sealing head produces an eventual different sealing of the capsule on the edges, as disclosed and described in the cited Italian patent application no.102020000030905, which is also completely random and/or uncontrolled.

EP-A1-3209571 discloses a rotation actuator within a machine for moving containers e.g. cans having an image detector as a cam to detect by image processing the orientation of the container.

GB1040239A discloses a system according to the preamble of claim 1.

The present invention proposes to solve the drawbacks of the above-mentioned known art and to providing a can processing machine equipped with a can alignment system capable of achieving a known and desired positioning of a can in a can processing station, i.e. that the opening and relative tab have a known angular alignment within the same station. In the particular case of an encapsulating machine, it is desired that the can have a known and desired alignment with respect to the sealing head present in each of the sealing stations in order to perform the sealing of the overlay sheet on the upper edge of the can with stronger or weaker adhesion depending on the relative positioning with respect to the opening of the can.

One purpose of the invention is to achieve a known and time-definite alignment of the cans within a processing station.

One purpose is to realise the desired can alignment within the processing station with a practical, convenient and efficient can alignment system.

One aim is to achieve a can alignment that can be simply applied to known state-of-the-art processing machines, requiring a machine conversion that is practical, reliable and additionally economical.

To achieve these aims, it is an object of the present invention to provide a can alignment system for a can processing machine and related can processing machine according to the features of the appended claims.

The invention is defined by a can alignment system of a can processing machine for achieving a known and precise angular alignment of the respective opening and tab of the can according to claim 1

A feature of the invention is to comprise can alignment means associated with at least one of the cans transfer device, the first carousel, the can transition device to achieve the known and precise angular alignment of the can.

Advantageously, such presence of can alignment means solves the technical problem of having a can oriented in a known and desired way, which is not known in application on can processing machines.

According to the invention, the can alignment means comprise a mechanical can blocking device capable of blocking the rotation of the can within a first cavity of the first carousel at a given and precise position by mechanical interference with the can tab between a can blocking station and a can release station of said mechanical blocking device.

Advantageously, the applied solution is effective and easy to apply on existing can processing machine carousels through simple modifications thereof.

The angular alignment operation is advantageously reliable and safe as the can alignment means, in particular the mechanical blocking device works exclusively by mechanical interference.

Further purposes, features and advantages of the present invention will become clear from the following detailed description of some preferred embodiments of the invention, provided purely by way of explanation and not limitation by means of the appended figures, wherein:
- Figure 1 represents a schematic top view of part of a machine for processing cans, in detail of a can encapsulating machine including a first embodiment of a can alignment system according to the invention;
- figure 2 represents a perspective view of a can suitable to be processed by the machine part of figure 1;
- figures 3-9 respectively represent an elevation view, a top view, a crosshatched detail of the view of figure 3, a pair of perspective views with relative enlarged details of an element, in particular a first carousel of the machine part of figure 1;
- figures 10 and 11 illustrate a top view and a perspective view of part of the can alignment system inserted in the machine part of figure 1, where some details have been omitted for visual clarity;
- figure 12 illustrates the view of a detail according to section A-A of figure 10;
- figures 13-15 represent perspective views from two different angles with omission of some details of a particular of the machine part of figure 1, in the last figure also partially sectioned, where some details have been omitted for visual clarity;
- figures 16 and 17 illustrate respectively a schematic top view and a schematic perspective view of a second embodiment of can alignment system which is not part of the invention, wherein some secondary elements have been omitted for visual clarity of;

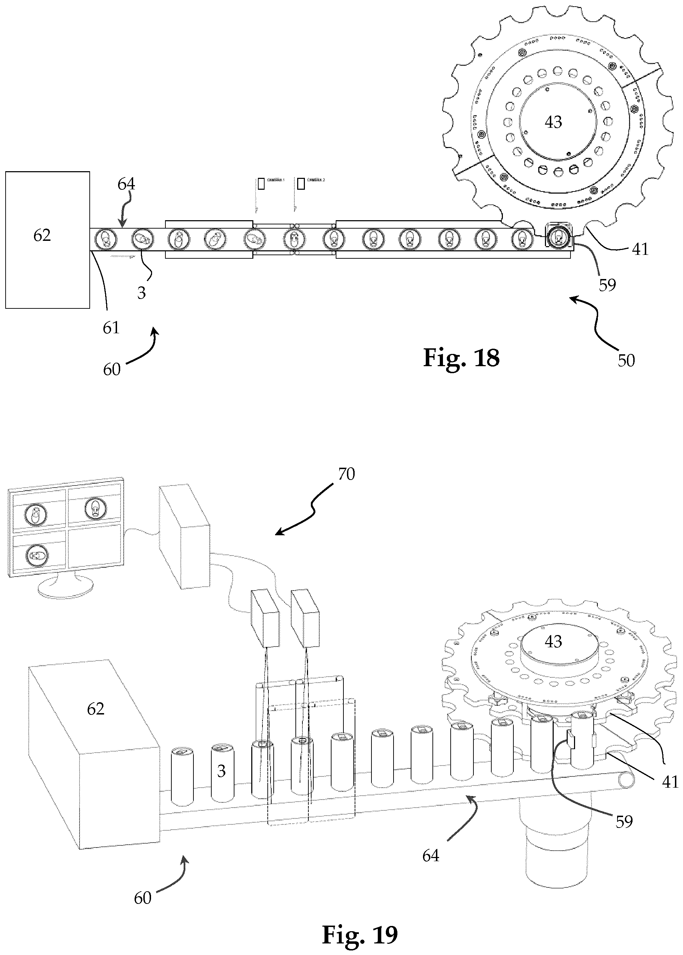

- figures 18 and 19 illustrate respectively a schematic top view and a perspective view with omission of some secondary elements of a variant of the second embodiment of figures 13-14.

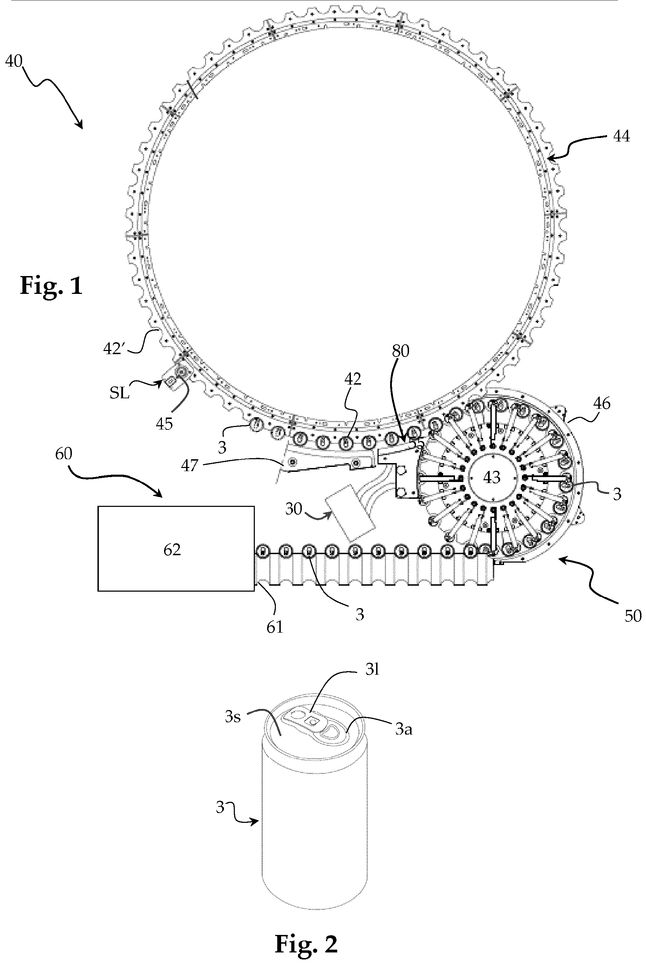

With reference to the aforementioned figures, a part of a machine for processing cans according to a first embodiment of the invention is indicated overall with 40, in detail a can encapsulating machine comprising a can alignment system capable of achieving a known and precise angular alignment of the respective opening 3a and tab 3l of a can 3 to be processed, the system being indicated overall with 50. More in detail, figure 1 shows in its entirety a part of a can encapsulating machine 40 of a type for example as described and illustrated in patent document no. ITBO22020325, which has:
- a can transfer device, for example a motorised auger device 60 for transferring a plurality of cans 3 from a first station 61 to first carousels 41 of a first carousel 43, wherein the first station 61 is located in correspondence with a can feeding device 62 suitable for supplying a plurality of cans 3 to be processed by conveying them onto the transport device 60 for a continuous cycle processing of the same cans 3;
- the first carousel 43 suitable for sorting and distributing the cans 3 within the first cavities 41, for example defined by a double segmented wheel 41' of the first carousel 43 and a first outer bulkhead 46, in the direction of a second carousel 44;
- the second carousel 44, which is provided with second cavities 42 for example defined by a second double segmented wheel 42' of the second carousel 44 and a second outer bulkhead 47, wherein the second cavities 42 are associated with at least one can processing station SL provided with a sealing head 45 for processing the same cans 3,
- a can transition device 80 for the guided passage of the cans 3 from the first cavities 41 of the first carousel 43 to the second cavities 42 of the second carousel 44.

Figure 2 illustrates a can 3 suitable for being processed within the machine according to the invention, of a known type i.e. having a tab 3l covering an opening 3a located on the upper surface 3s thereof.

It is important to note that the can alignment system comprises can alignment means, also denoted by 50 as a whole, which are associated with at least one of the aforementioned can transport device 60, first carousel 42 and can transition device 80 in order to achieve a known and precise angular alignment of the can 3, as will be clear in the further description of the embodiments of the invention.

For this purpose, we refer to the first embodiment of the invention with specific reference to the first carousel 43 is provided with can alignment means 50 and with particular reference to Figures 1-9. The can alignment means comprise, for example, a mechanical can blocking device 50 capable of blocking the rotation of each can 3 within respective first cavities 41 of the first carousel 43 at a given and precise position by mechanical interference with the tab 3l of a can 3 between a can blocking station SB and a can release station SR for releasing said mechanical can blocking device 50.

For example, the mechanical can block device comprises a rod and rocker device 50 suitable for blocking rotation of a can 3 via a contact protuberance 54 of a rocker 56 of the rod and rocker device 50 by interference with a side profile of the tab 3l of the can 3 in a can lock position.

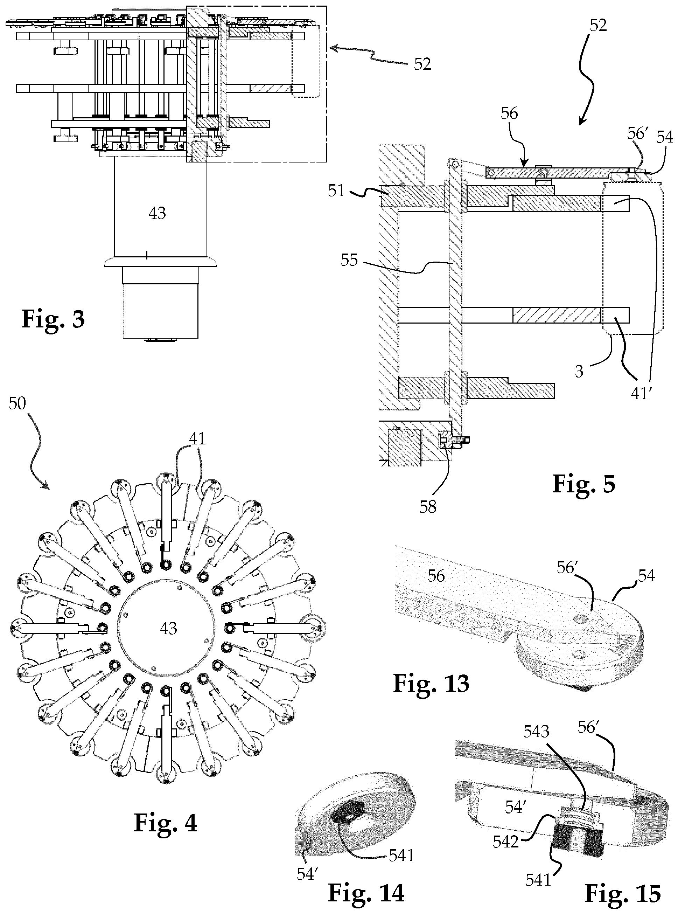

With particular reference to Figure 5, the rod and rocker device 50 has a plurality of rod and rocker mechanical arrangements 52 each of which is associated with a single first cavity 41 of the first carousel 43 and comprises:
- a rod 55 capable of translating vertically with respect to the first carousel 43 moved by a cam 58 associated to it inferiorly,
- a rocker arm 56, hinged on a frame 51 of the first carousel 43, at the ends of which are present on the inner one an upper terminal part of the rod 55 hinged to the same, on the outer one the contact protuberance 54 apt to interfere with a side profile of the tab 3l of the can 3 in the can locking position when the rod 55 moves vertically upwards, thus pushing the contact protuberance 54 downwards.

The contact protuberance 54 for example may be conformed as a disc 54' hinged centrally on an end portion 56' of the rocker 56 so as to be able to be rotated and fixed according to different angular operating positions by relative adjustment means, for example a fixing screw, omitted for simplicity of representation. Underneath the disc 54', for example, there is a cavity 542 obtained eccentrically with respect to its centre and suitable for housing an interference element 541, longitudinally mobile inside it and opposed by an elastic means, for example a helical spring 543 suitable to guide in a controlled way its relative excursion towards the disc 54' in case it touches frontally the body of the tab 3l during the excursion of the finger 54 downwards, so as not to interfere frontally and to allow the can 3 to continue its rotation inside the first cavities 41. Each rod and rocker arrangement 52 is adjusted such that in its maximum vertical excursion, the interference element 541 never touches the upper surface 3s of the can 3, stopping at a height such that it laterally intercepts a lateral profile of the tab 3l. Therefore, with such an example of configuration, the finger 54 is suitable to interfere, by means of its element 541, with a lateral profile of the tab 3l advantageously also in the case in which the element 541 would meet in its downward excursion the body of the tab 3l.

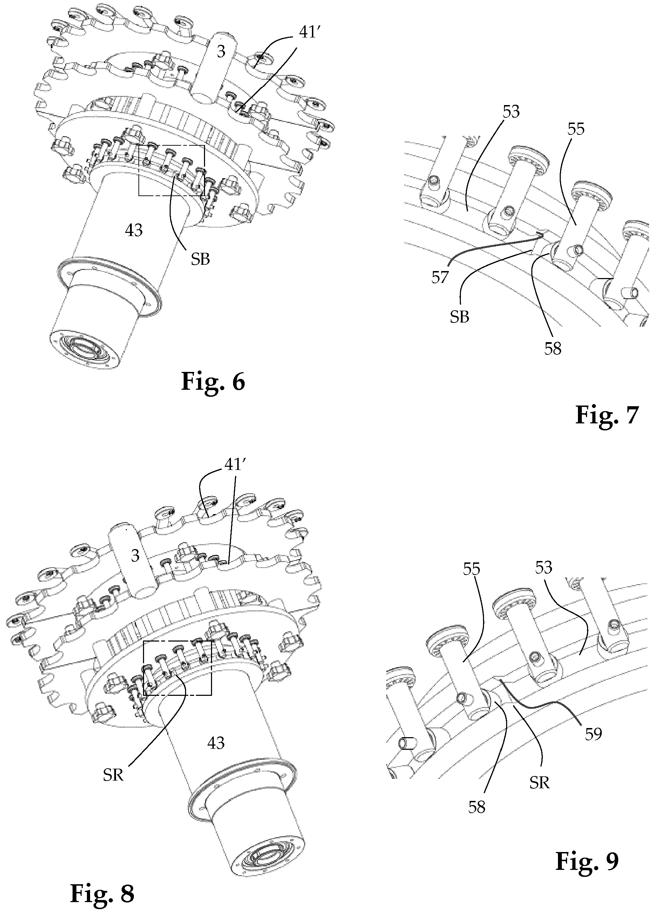

The rod and rocker device 50 is associated with cams 58 which engage in a guide 53, for example recessed into a circumferential surface of the first carousel 43 and which are capable of vertically moving the rods 55 associated with the rockers 56 into the can lock position when transiting through the lock station SB whereby they push the rods 55 upwards, and in the can release position when the cams 58 transit the can release station SR whereby the rods move downward releasing contact with the corresponding side surface of the tab 3l. The can blocking station SB is particularly visible with reference to the detail of figure 7, where it is noted the presence of a step 57 capable of moving the cam 58 upwards when it transits therein, thus causing the contact protuberance 54 to lower towards the can 3 in the locked position. The can release station SR is clearly visible in figure 9, where there is now present a second step 59 able to move the cam 58 downwards when it transits therein, thus causing the raising of the finger 54 with consequent release of the can 3.

The operation of the encapsulating machine 40 including the rod and rocker device 50 described so far is as follows, under the unillustrated assumption that those just described, associated with the first carousel 43, are the only can alignment means present.

A can 3, supplied by the can feeding device 62, is conveyed by the motorised auger device 60 from the first station 61 towards the first cavities 41 of the first carousel 43. Once positioned inside them, the can transits in correspondence with the blocking station SB where, according to methods already described, the rod and rocker device 50 moves downwards the contact protuberance 54 which, while the can rotates in a calculable way around its vertical axis, goes to interfere at a known moment with a lateral profile of the tab 3l of the can 3 in the can blocking position. In this position, the alignment of the can is therefore known and defined, since the positioning of the contact protuberance 54 on the first carousel 43 is known. At the moment when the can 3 encounters the second carousel 44 and is about to transit on the can transition device 80, it transits in the can release station SR where the rod and rocker device 50 moves this time the contact protuberance 54 upwards disengaging it from the tab 3l in the can release position, whereby the can transits on the can transfer device 80 until it arrives at the corresponding second cavity 44 of the second carousel 42. Now the can may still slightly rotate around its own vertical axis until it is processed in the processing station SL by the sealing head 45 which applies a capsule to it above, as for example described in Italian patent application no.102020000030905. Since it is known at which point of the second carousel 44 the can 3 is processed, for example and advantageously in proximity to the can transfer device 80, it is simply calculable the possible small rotation that the can 3 performs and therefore the alignment of the respective opening and tongue of the can at the moment in which the sealing head 45 processes it is also known and defined. Therefore, this solution advantageously guarantees a known and precise alignment of the can.

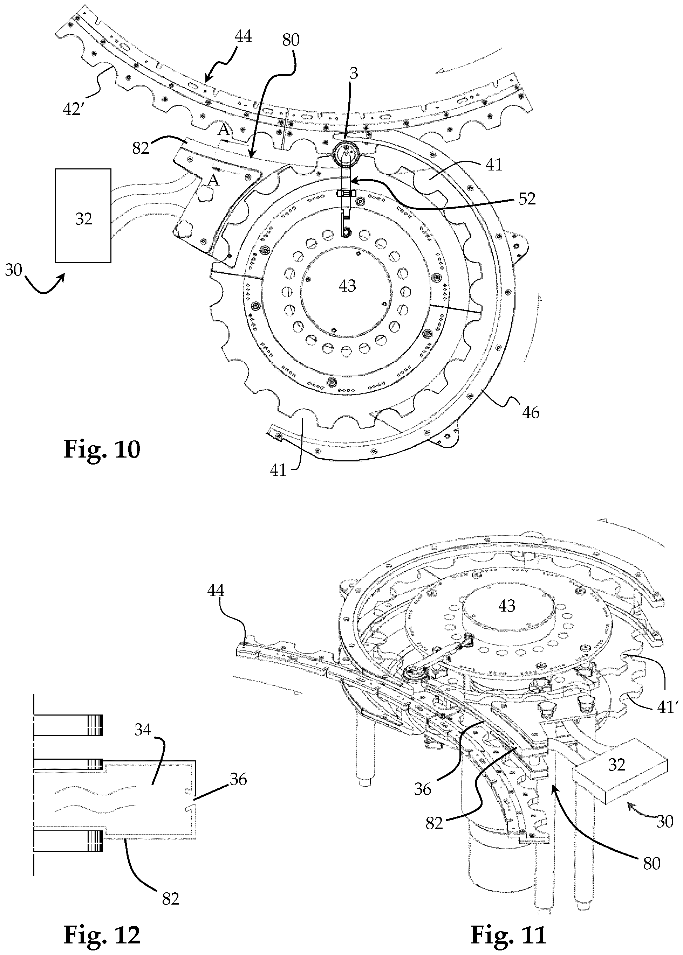

With particular reference to Figures 10-12, the can transition device 80 equipped in turn with can alignment means, for example consisting of thrust means acting in a radial direction towards the second carousel 44, such as a blowing device, indicated as a whole with 30, associated with the can transfer device 80 for blowing air onto the cans 3 in a radial direction towards the second carousel 44, is illustrated in greater detail. For example, the blowing system 30 comprises a compressor 32 which sends pressurised air into an accumulation chamber 34 obtained in proximity to an outer edge of a directional guide 82 of the cans transition device 80 apt to direct the cans 3 correctly inside the second cavities 42. As is clearly visible in figure 12, the accumulation chamber 34 is for example provided with a slit diffuser 36 which faces radially towards the centre of the second carousel 44 and advantageously develops along the entire circumferential extension of the directional guide 82, that is, along almost the entire path that the can 3 takes when it transits over the can transition device 80. In this way, the compressed air, which has accumulated inside the accumulation chamber 34 with a known pressure, escapes from the slit diffuser 36 radially towards the centre of the second carousel 44 exerting a known pressure on the cans 3 which thus, pushed forcefully on the edges 42' inside the second carousel 44 of the second cavities 42, are prevented by friction from rotating so that the cans remain substantially in the same alignment in which the rod and rocker device 50 has directed them after they have passed through the transition device 80, as previously described.

Advantageously, this solution ensures, in a simple and functional manner, that the cans maintain with greater certainty a known and precise alignment when they enter the second carousel ready to be processed.

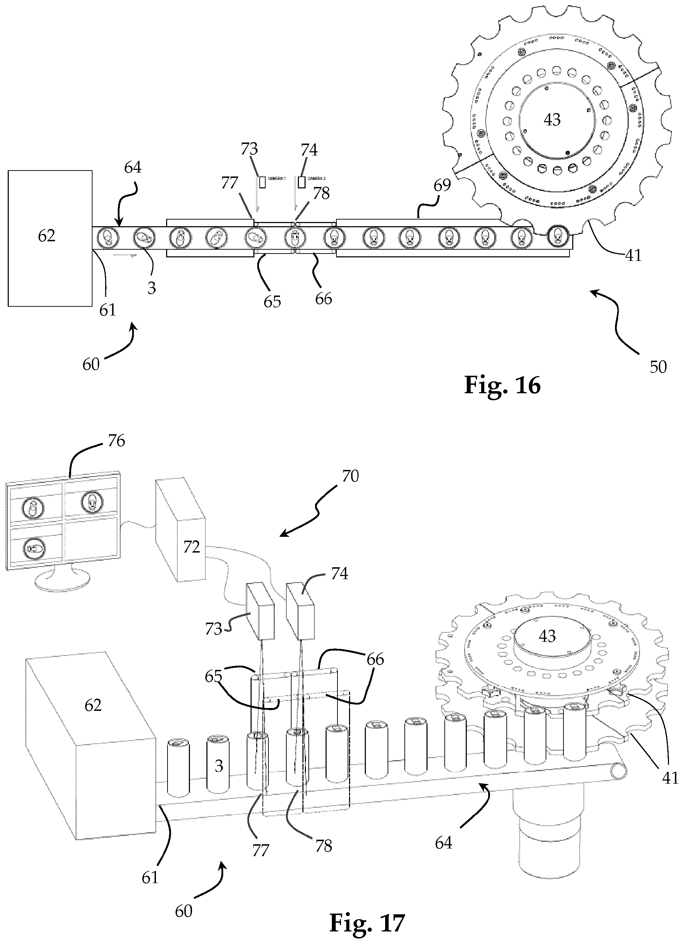

With reference to Figures 13-16, a second embodiment and related variant of a can alignment system which is not part of the invention is described, where this time the can alignment means are primarily associated with a can transport device. More in detail, the can transport device comprises, for example, a can conveyor belt device 60 of a visual can alignment monitoring type, which comprises, for example:
- a can feeder belt 64 for transferring cans 3 from a first station 61 towards the first cavities 41 of the first carousel 43, laterally bounded by bulkheads 69 which for clarity have been omitted in the embodiments of figures 14 and 16;
- a belt means for orienting a can, for example a first 65 and a second 66 pair of can orienting belts, which are placed, between the bulkheads 69, close and contiguous to each other transversely to the can feeder belt 64 and movable along the same direction in which the can feeder belt 64 moves, operatively in contact with the lateral surface of each can 3 when the can feeder belt 64 brings them in the influence zone of the mentioned pairs of belts 65, 66;
- a can positioning monitoring device, indicated overall by 70.

Said can monitoring device 70 comprise a computer 72 in data exchange connection e.g. electrical connection with the first 65 and second 66 pairs of can alignment belts for sliding and possible relative rotation of the can 3 as it passes through the first 65 and second 66 pairs of can alignment belts. For this purpose, a first 73 and a second camera 74 are in data exchange connection e.g. electrically connected to the computer 72 equipped with a monitor 76 and an information processing program suitable for monitoring and recognising the positioning of the opening 3a and the tab 3l of a can 3 when it passes through a first monitoring station 77, located at the beginning of the first pair of conveyor belts 65 in correspondence with the first camera 73, as well as when it passes through a second monitoring station 78, located at the beginning of the second pair of conveyor belts 66 in correspondence with the second camera 74.

The computer program, when a can 3 passes through the respective monitoring station 77, 78 is able to send a command to the respective pair of conveyor belts 65, 66 so that each pair of belts, operatively in contact from opposite sides to the can 3 which is placed on and is transported by the feeder belt 64, can be commanded to move at the same speed of the conveyor belt so that the can in transit remains in the same alignment with which it enters the monitoring station, or to move at different speeds calibrated in such a way as to make the can rotate around its vertical axis in a clockwise or counter-clockwise direction according to a known and precise angular alignment of the cans with speeds synchronised with the speed of the feeder belt, in such a way as not to displace its positioning on the belt with respect to the next can following in the continuous cycle processing.

A physical condition for each can to be rotated independently of the next can is that the length of each conveyor belt must not be greater than the distance at which adjacent cans 3 are positioned and processed, the distance clearly depending on the conformation and respective spacing of the first cans 41 present on the first carousel 43.

Advantageously, the conveyor belt device 60 with visual monitoring of the alignment of the cans according to what has just been described achieves a known and precise angular alignment of the cans 3, which enter the first carousel 43, pass through a can transition device of a known type until they reach the second carousel 44 where they are processed. The angular alignment of the cans remains known and precise also inside the second cavities 42 of the second carousel as the centrifugal forces and any rotations the cans undergo before processing are known, calculable and monitorable.

Figures 15 and 16 illustrate a variant to the conveyor belt device 60 of a visual can alignment monitoring type as described, in which there are additional can alignment means associated with the first carousel 43, which for simplicity and clarity have only been depicted in the drawings for one first cavity 41 and which are nevertheless present in all first cavity 41. In particular, they comprise vice means, for example a vice 59 suitable for gripping the can 3 during the respective passage from the feeder belt 64 to the first carousel 43 and securing it inside the first cavity 41, preventing its relative rotation. The vice 59, present in each first cavity 41, is radially placed in the first carousel 43 for fixing each can 3 within the corresponding first cavity 41, in particular during the passage from the can feeder belt 64 to the respective first cavity 41.

Advantageously, the presence of the gripping means prevents the can from rotating within its own first cavity, where it is subject to the increased centrifugal force by which it rotates about the vertical axis. Therefore, the described variant makes it more known that each can arrives in the second carousel with the desired alignment for processing.

For example, the belt means for orienting cans relating to the second embodiment could comprise only one pair of can alignment belts, thereby simplifying the application at the expense of less control over the actual can alignment achieved by the can transport device.

## Claims

1. Can alignment system of a can processing machine for achieving a known and precise angular alignment of the respective opening (3a) and tab (3l) of the can (3), the can processing machine (40) comprising:
- a can transport device (60) for transferring a plurality of cans from a first station (61) towards first cavities (41) of a first carousel (43),
- said first carousel (43) suitable for sorting and distributing cans (3) towards a second carousel (44),
- said second carousel (44) having second cavities (42) associated with at least one can processing station (SL) for processing the same cans (3),
- a can transfer device (80) for passing the cans (3) from the first cavities (41) of the first carousel (43) to the second cavities (42) of the second carousel (44); alignment means (50) associated with at least one of said can transport device (60), first carousel (43), and
can transfer device (80) for achieving said known and precise angular alignment of the can (3), wherein can alignment means (50) associated with the first carousel (43) are provided;
**characterized in that** said can alignment means comprise a mechanical cans locking device (50) for locking the can rotation (3) within the respective first cavity (41) of the first carousel (43) at a known and
precise position by mechanical interference with the tab (3l) of a can (3) between a can blocking station (SB) and a can release station (SR) for releasing said mechanical can blocking device (50).

2. Can alignment system according to the preceding claim, **characterised in that** the mechanical can blocking device comprises a rod and rocker device (50) for blocking rotation of a can (3) by means of a contact protuberance (54) of a rocker (56) of said rod and rocker device (50) by interference in particular with a side profile of the tab (3l) of the can (3) in a can lock position, the rod and rocker device (52) being associated with cams (58) engaging in a guide (53) and capable of moving rods (55) associated with finger rockers (57) in a can block position when they are in the blocking station (SB) and in a can release position when the cams (58) are in the can release station (SR).

3. A can alignment system according to any one of the preceding claims, **characterized in that** it comprises can alignment means (30) associated with the can transfer device (80).

4. Can alignment system according to any of the preceding claims, **characterised in that** said can alignment means comprise thrust means acting in a radial direction towards said second carousel (44), in particular a blowing device (30) associated with the can transfer device (80) for blowing air onto the cans (3) in a radial direction towards said second carousel (44).

5. Can alignment system according to claim 1, **characterized in that** it comprises can alignment means (50) associated with the can transport device (60).

6. Can alignment system according to the preceding claim, **characterised in that** it comprises a can feeder belt (64) for transferring cans (3) to said first carousel (43), said can alignment means comprising a can positioning monitoring device (70), belt means suitable for orienting cans (65, 66) operatively in contact with the side surface of each can (3) and in electrical connection with a computer (72) of said can positioning monitoring device (70) for sliding and possible relative rotation of said can (3) as it passes in contact with said belt means for orienting cans (65,66).

7. Can alignment system according to the preceding claim, **characterised in that** the can alignment means comprise clamp means (59) placed radially in the first carousel (43) for securing each can (3) within the corresponding first cavity (41) in the transition from the can feeder belt (64) to the respective first cavity (41).

8. A can processing machine, in particular a can encapsulating machine (40), **characterised by** comprising a can alignment system (50) according to any one of the preceding claims.

## Patentansprüche

1. Ein Dosenausrichtungssystem einer Dosenverarbeitungsmaschine zur Erzielung einer bekannten und präzisen winkeligen Ausrichtung der entsprechenden Öffnung (3a) und der Lasche (31) der Dose (3), wobei die Dosenverarbeitungsmaschine (40) jeweils Folgendes umfasst:
- eine Dosentransporteinrichtung (60) zur Überführung einer Vielzahl von Dosen von einer ersten Station (61) in Richtung erster Aussparungen (41) eines ersten Umlaufförderers (43),
- wobei der genannte erste Umlaufförderer (43) geeignet ist, Dosen (3) jeweils auszusortieren und zu verteilen, und zwar in Richtung eines zweiten Umlaufförderers (44),
- wobei der genannte zweite Umlaufförderer (44) zweite Aussparungen (42) aufweist, welche mit mindestens einer Dosenverarbeitungsstation (SL) zur Verarbeitung der Dosen (3) selbst verbunden ist,
- eine Dosenübertragungseinrichtung (80), um die Dosen (3) von den ersten Aussparungen (41) des ersten Umlaufförderers (43) an die zweiten Aussparungen (42) des zweiten Umlaufförderers (44) weiterzureichen; entsprechende Ausrichtungselemente (50), welche mit mindestens einer der genannten Dosentrasporteinrichtung (60), dem ersten Umlaufförderer (43) und der Dosenübertragungseinrichtung (80) verbunden sind, um die genannte bekannte und präzise winklige Ausrichtung der Dose (3) zu erzielen, wobei entsprechende Dosenausrichtungselemente (50), welche jeweils mit dem ersten Umlaufförderer (43) verbunden sind, vorgesehen sind; **dadurch gekennzeichnet, dass** die genannten Dosenausrichtungselemente eine mechanische Dosenverriegelungseinrichtung (50) umfassen, und zwar zur Arretierung der Dosenumdrehung (3) innerhalb der entsprechenden ersten Aussparung (41) des ersten Umlaufförderers (43) in einer bekannten und präzisen Stellung durch mechanische Interferenz mit der Lasche (31) einer Dose (3) zwischen einer Dosenverriegelungsstation (SB) und einer Dosenfreigabestation (SR) zur Freigabe der genannten mechanischen Dosenverriegelungseinrichtung (50).

2. Ein Dosenausrichtungssystem gemäß dem vorausgegangenen Anspruch, **dadurch gekennzeichnet, dass** die mechanische Dosenverriegelungseinrichtung eine Stangen- und Wippeinrichtung (50) für die Arretierung der Umdrehung einer Dose (3) mit Hilfe einer entsprechenden Kontaktausstülpung (54) einer Wippe (56) der genannten Stangen- und Wippeinrichtung (50) durch Interferenz insbesondere mit einem Seitenprofil der Lasche (31) der Dose (3) in einer Dosenverriegelungsstellung umfasst, wobei die Stangen- und Wippeinrichtung (52) jeweils mit entsprechenden Nocken (58) verbunden ist, welche in eine Führung (53) eingreifen und Stangen (55) bewegen können, die mit Zapfenwippen (57) in einer Dosenverriegelungsstellung verbunden sind, wenn sie sich in der Verriegelungsstation (SB) befinden, und in einer Dosenfreigabestellung, wenn die Nocken (58) sich in der Dosenfreigabestation (SR) befinden.

3. Ein Dosenausrichtungssystem gemäß einem beliebigen der vorausgegangenen Ansprüche, **dadurch gekennzeichnet, dass** es Dosenausrichtungselemente (30) umfasst, welche jeweils mit der entsprechenden Dosenübertragungseinrichtung (80) verbunden sind.

4. Ein Dosenausrichtungssystem gemäß einem beliebigen der vorausgegangenen Ansprüche, **dadurch gekennzeichnet, dass** die genannten Dosenausrichtungselemente jeweils entsprechende Schubelemente umfassen, welche in radialer Richtung in Richtung des genannten zweiten Umlaufförderers (44) wirken, und zwar insbesondere eine Blaseinrichtung (30), welche mit der Dosenübertragungseinrichtung (80) verbunden ist, um in radialer Richtung Luft auf die Dosen (3) in Richtung des genannten zweiten Umlaufförderers (44) zu blasen.

5. Ein Dosenausrichtungssystem gemäß Anspruch 1, **dadurch gekennzeichnet, dass** es entsprechende Dosenausrichtungselemente (50) umfasst, welche jeweils mit der Dosentransporteinrichtung (60) verbunden sind.

6. Ein Dosenausrichtungssystem gemäß dem vorausgegangenen Anspruch, **dadurch gekennzeichnet, dass** es Folgendes umfasst:
ein Dosenzuführförderband (64) für die Übertragung der Dosen (3) zu dem genannten ersten Umlaufförderer (43), wobei die genannten Dosenausrichtungselemente eine entsprechende Dosenpositionierungsüberwachung (70) sowie Bandelemente umfassen, welche geeignet sind, die Dosen (65, 66) entsprechend auszurichten und die sich in operativer Berührung mit der Seitenfläche jeder Dose (3) sowie in elektrischer Verbindung mit einem Computer (72) der genannten Dosenpositionierungsüberwachung (70) befinden, und zwar zur Gleitung und zur möglichen entsprechenden Drehung der genannten Dose (3), sobald sie in Berührung mit den genannten Bandelementen zur Ausrichtung der Dosen (65, 66) durchläuft.

7. Ein Dosenausrichtungssystem gemäß dem vorausgegangenen Anspruch, **dadurch gekennzeichnet, dass** die Dosenausrichtungselemente jeweils entsprechende Klemmelemente (59) umfassen, welche radial in dem ersten Umlaufförderer (43) angeordnet sind, um jede Dose (3) innerhalb der entsprechenden ersten Aussparung (41) beim Übergang von dem Dosenzuführförderband (64) zu der entsprechenden ersten Aussparung (41) zu arretieren.

8. Eine Dosenverarbeitungsmachine, insbesondere eine Doseneinkapselungsmaschine (40), **dadurch gekennzeichnet, dass** sie ein Dosenausrichtungssystem (50) gemäß einem beliebigen der vorausgegangenen Ansprüche umfasst.

## Revendications

1. Système d'alignement de boîtes d'une machine de traitement de boîtes pour réaliser un alignement angulaire connu et précis de l'ouverture correspondante (3a) et de la languette (31) de la boîte (3), la machine (40) de traitement de boîtes comprenant :
- un dispositif de transport de boîtes (60) pour transférer une pluralité de boîtes depuis une première station (61) vers des premières cavités (41) d'un premier carrousel (43),
- ledit premier carrousel (43) étant adapté au tri et à la distribution des boîtes (3) vers un deuxième carrousel (44),
- ledit deuxième carrousel (44) ayant des deuxièmes cavités (42) en association avec au moins une station de traitement de boîtes (SL) pour le traitement desdites boîtes (3),
- un dispositif de transfert de boîtes (80) pour le passage des boîtes (3) des premières cavités (41) du premier carrousel (43) vers les deuxièmes cavités (42) du deuxième carrousel (44) ; des moyens d'alignement (50) associés avec au moins l'un desdits dispositifs de transport de boîtes (60), le premier carrousel (43), et le dispositif de transfert des boîtes (80) pour obtenir ledit alignement angulaire connu et précis de la boîte (3), où des moyens d'alignement (50) de boîtes associés avec le premier carrousel (43) sont fournis ;
**caractérisé en ce que** lesdits moyens d'alignement des boîtes comprennent un dispositif mécanique de verrouillage des boîtes (50) pour verrouiller la rotation de la boîte (3) dans la première cavité correspondante (41) du premier carrousel (43) dans une position connue et précise par une interférence mécanique avec la languette (31) de la boîte (3) entre une station de blocage des boîtes (SB) et une station de déblocage des boîtes (SR) pour débloquer ledit dispositif mécanique de blocage des boîtes (50).

2. Système d'alignement de boîtes selon la revendication précédente, **caractérisé en ce que** le dispositif mécanique de blocage des boîtes comprend un dispositif à tige et culbuteur (50) pour bloquer la rotation d'une boîte (3) au moyen d'une protubérance à contact (54) d'un culbuteur (56) dudit dispositif à tige et culbuteur (50) par interférence en particulier avec un profil latéral de la languette (31) de la boîte (3) dans une position de verrouillage de la boîte, le dispositif à tige et culbuteur (52) étant associé à des cames (58) s'engageant dans un guide (53) et capables de déplacer des tiges (55) associées à des culbuteurs à doigts (57) dans une position de blocage des boîtes lorsqu'elles sont dans la station de blocage (SB) et dans une position de déblocage des boîtes lorsque les cames (58) sont dans la station de déblocage des boîtes (SR).

3. Un système d'alignement de boîtes selon l'une quelconque des revendications précédentes, **caractérisé en ce qu'**il comprend des dispositifs d'alignement de boîtes (30) associés au dispositif de transfert des boîtes (80).

4. Système d'alignement de boîtes selon l'une quelconque des revendications précédentes, **caractérisé en ce que** lesdits dispositifs d'alignement de boîtes comprennent des moyens de poussée agissant dans une direction radiale vers ledit deuxième carrousel (44), en particulier un dispositif de soufflage (30) en association avec le dispositif de transfert de boîtes (80) pour souffler de l'air sur les boîtes (3) dans une direction radiale vers ledit deuxième carrousel (44) .

5. Système d'alignement de boîtes selon la revendication 1, **caractérisé en ce qu'**il comprend des dispositifs d'alignement de boîtes (50) en association avec le dispositif de transport de boîtes (60).

6. Système d'alignement de boîtes selon la revendication précédente, **caractérisé en ce qu'**il comprend un convoyeur d'alimentation de boîtes (64) pour transférer des boîtes (3) vers ledit premier carrousel (43), ledit moyen d'alignement de boîtes comprenant un dispositif de contrôle (70) du positionnement des boîtes, un moyen courroie prévu pour orienter les boîtes (65, 66) opérationnellement en contact avec la surface latérale de chaque boîte (3) et en connexion électrique avec un ordinateur (72) dudit dispositif de contrôle du positionnement des boîtes (70) pour le glissement et la possible rotation correspondante de ladite boîte (3) lorsqu'elle passe en contact avec ledit moyen courroie pour orienter les boîtes (65, 66).

7. Système d'alignement de boîtes selon la revendication précédente, **caractérisé en ce que** le moyen d'alignement des boîtes comprend un dispositif de serrage (59) situé radialement dans le premier carrousel (43) pour sécuriser chaque boîte (3) dans la première cavité correspondante (41) lors de la transition depuis le convoyeur d'alimentation de boîtes (64) vers la première cavité correspondante (41) .

8. Une machine de traitement de boîtes, en particulier une machine d'encapsulage de boîtes (40), **caractérisée en ce qu'**elle comprend un système d'alignement de boîtes (50) selon l'une quelconque des revendications précédentes.
